# EUROPÄISCHE PATENTSCHRIFT

(11) **EP 0 501 122 B1**
(45) Veröffentlichungstag und Bekanntmachung des Hinweises auf die Patenterteilung: **15.11.1995**
(21) Anmeldenummer: 92100645.8
(22) Anmeldetag: 16.01.1992
(51) Int. Cl.: B01F 15/00, F16J 15/00, F16J 15/40, F16J 15/32

(54) **Lager für Mischwerkswelle od. dgl.**
Bearing for stirrershaft or similar
Palier pour arbre de mélangeur ou similaire

(30) Priorität: 28.02.1991 DE 4106368
(43) Veröffentlichungstag der Anmeldung: 02.09.1992
(73) Patentinhaber: Gebr. Lödige Maschinenbau Gesellschaft mbH, D-33102 Paderborn (DE)
(72) Erfinder: Mühlenhoff, Johannes, W-4791 Altenbeken (DE); Schmidt, Alfons, Dipl.-Ing., W-4795 Delbrück (DE)
(74) Vertreter: Türk, Gille, Hrabal, Leifert

(56) Entgegenhaltungen:
- DE-A- 1 684 004
- DE-A- 1 816 057
- GB-A- 834 923
- US-A- 3 120 948
- US-A- 3 318 606
- US-A- 4 243 230
- US-A- 4 463 957

## Beschreibung

Die Erfindung betrifft ein Lager für die Welle des Mischwerkes eines Mischers od. dgl., die durch eine hochtemperaturbeständige Hochvakuum-Dichtung aus dem Behälter des Mischer od. dgl. herausgeführt ist, wobei dieses Lager ein feststehendes Gehäuse, das an der Außenseite des Behälters angeordnet ist, ferner Wälzlager zwischen der drehbaren Welle und dem feststehenden Gehäuse und außerdem eine Dichtung aufweist, die innerhalb des Lager-Gehäuses zwischen der Welle und der Wand des Behälters koaxial zu den Wälzlagern angeordnet ist.

Die Lagerung der Mischwerkswelle eines Mischers oder Reaktors, in dessen Behälter Güter bei sehr großen Unterdrücken bzw. unter Hochvakuum und auch bei hohen Temperaturen behandelt werden, ist problematisch, denn diese Lagerung befindet sich außerhalb des Behandlungs-Behälters und somit in einem Bereich, in welchem wesentlich geringere Temperaturen herrschen als innerhalb des Behandlungs-Behälters.

Für eine zufriedenstellende Abdichtung mittels einer hochtemperaturbeständigen Hochvakuum-Dichtung im gekühlten bzw. kühleren Teil eines Mischers od. dgl. ist es erforderlich, daß die Lagerung absolut spielfrei einstellbar ist und Durchbiegungen der Mischwerkswelle sowie Wärmeschwankungen die eigentliche Lagerung nicht beeinträchtigen können.

Aufgabe der Erfindung ist es, ein Lager für die Welle des Mischwerkes eines Mischers, Reaktors od. dgl. zu schaffen, das für Arbeitsbedingungen geeignet ist, bei denen im Behälter des Mischers, Reaktors od. dgl. hohe Temperaturen und extremer Unterdruck bwz. Hochvakuum angewendet werden.

Diese Aufgabe wird erfindungsgemäß mit einem Lager der eingangs genannten Gattung gelöst, welches die Merkmale des kennzeichnenden Teiles des Patentanspruches 1 aufweist. Vorteilhafte Ausgestaltungen und Weiterbildungen der Erfindungen sind Gegenstand der Unteransprüche.

Durch die Erfindung wird ein Lager für die Mischwerkswelle eines Mischers, Reaktors od. dgl. geschaffen, in dessen Behälter mit hohen Temperaturen und bei hohem Unterdruck bzw. Hochvakuum gearbeitet wird, wobei dieses Lager und die diesem zugeordnete Abdichtung große temperaturbedingte Dehnungen und Schrumpfungen aufnehmen und ausgleichen können. Das Lager ist absolut spielfrei einstellbar. Die Temperatur wird vom Innenring auf den Außenring der Wälzlagerung übertragen, wobei eine Ölschmierung vorgesehen sein kann. Das zum Schmieren verwendete Öl kann den Innenraum der Wälzlagerung ganz oder teilweise ausfüllen und dient auch zur Kühlung.

Durch die spezielle Anordnung der Wälzlager, beispielsweise Kegelrollenlager oder Rollenlager mit schräg gestellten Rollen, d. h. also Axiallager, erreicht man, daß sich bei steigenden Temperaturen die Vorspannung der einzelnen Lager erhöht.

Durchbiegungen der Welle werden auf Kugelkalotten übertragen, welche eine Art Außenlager innerhalb des Lager-Gehäuses bilden. Dadurch erreicht man, daß der Außenring des inneren Lagers praktisch stets parallel zur Längsachse der Welle des Mischwerkes steht.

Für Lager, welche mit einer Hochvakuum-Dichtung gekoppelt sind, kann man normale C3-Rollenlager nicht verwenden, weil diese ein zu großes Spiel haben. Erfindungsgemäß sind deshalb spezielle Wälzlager in spezieller Anordnung vorgesehen.

Bei der Abdichtung ergeben sich im hier interessierenden Anwendungsfall Probleme deshalb, weil die Betriebstemperaturen der Mischer, Reaktoren oder ähnlichen Apparate der hier interessierenden Art zwischen 20° und ca. 650° C liegen und auch innerhalb dieses Bereiches schwanken können. Daher sind hohe Dehnungen im Bereich der Dichtungen und der Lagerung möglich.

Die Hochvakuum-Dichtung weist Polringe auf. Eine magnetische Flüssigkeit ist als Gleitmittel vorgesehen. Die zugeordneten Wälzlager haben sehr enge Lagerluft.

Die Hochvakuum-Dichtung ist im gekühlten Teil des Mischers, Reaktors od. dgl. vorgesehen, d. h. außerhalb des Behandlungs-Behälters. Eine Vorabdichtung erfolgt durch zwischen den Polringen angeordnete schneckenförmig verlaufende Bürsten, die mit zylindrischen Innenflächen zusammenwirken.

In der Zeichnung ist ein Ausführungsbeispiel eines erfindungsgemäßen Lagers mit Abdichtung schematisch dargestellt, und zwar zeigt
- Fig. 1: einen Längsschnitt durch das Lager und die diesem zugeordnete Hochvakuum-Dichtung und
- Fig. 2: eine Einzelheit der Hochvakuum-Dichtung in gegenüber Fig. 1 vergrößertem Maßstab.

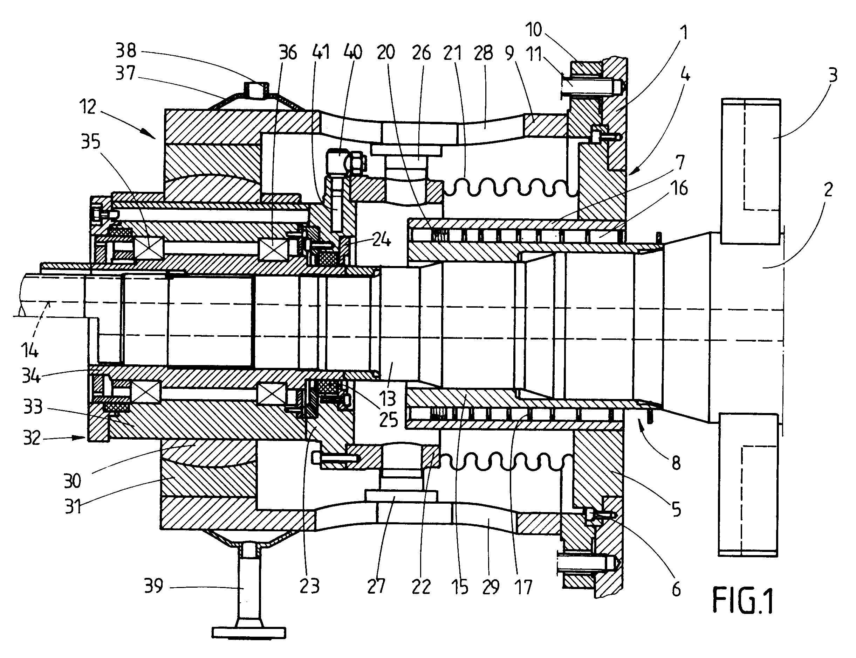

In Fig. 1 ist von einem Mischer, Reaktor od. dgl. lediglich eine Stirnwand (1) des Behandlungs-Behälters dieses Gerätes bzw. Apparates teilweise und das eine Ende der in diesem druckdicht gekapselten Behälter angeordneten Welle (2) eines nicht im einzelen dargestellten Mischwerkes oder Agitators gezeigt. Auf der Welle (2) sind dabei radial verlaufende Agitationswerkzeuge (3) angeordnet.

Die Stirnwand (1) des nicht näher gezeigten Behälters enthält eine Öffnung (4) als Durchgang für die Welle (2), in welche ein scheibenförmiger Deckel (5) eingesetzt und mittels Schrauben (6) drehfest mit der Stirnwand (1) verbunden ist. In einer zentralen Öffnung des Deckels (5) ist eine zylindrische Hülle (7) einer weiter unten näher beschriebenen Hochvakuum-Dichtung (8) angeordnet und befestigt.

An der Außenseite der Stirnwand (1) ist ein Gehäuse (9) mittels eines Flansches (10) und mittels Schraubenbolzen (11) befestigt. Dieses Gehäuse (9) umschließt die Hochvakuum-Dichtung (8) und dient außerdem zum Halten einer Lagerung (12) für das durch die Stirnwand (1) hindurchreichende Ende (13) der Welle (2), das mit einem hier nicht dargestellten Antrieb für das Mischwerk oder den Agitator verbunden sein kann.

In dem Ende (13) der Welle (2) ist eine axiale Bohrung (14) vorgesehen, welche sich bis in die Welle (2) erstreckt und diese auch axial durchsetzen kann. Diese Bohrung (14) dient zum Einleiten und Durchleiten von Kühlflüssigkeit wie Wasser. Entsprechende Anschlüsse für das Zu- und Ableiten der Kühlflüssigkeit sind in Fig. 1 nicht dargestellt.

Auf dem zapfenförmig ausgebildeten und verjüngten Ende (13) der Welle (2) ist eine Buchse (15) drehfest angeordnet, die konzentrisch zu und innerhalb der Hülle (7) angeordnet ist. Zwischen der Hülle (7) und der Buchse (15) befindet sich ein ringförmiger Freiraum (16), der zur Aufnahme einer wendelförmigen oder schneckenförmigen Bürste (17) dient, deren Grundkörper (18) mit engem Sitz und damit drehfest auf der Buchse (15) angeordnet ist, während deren Borsten (19) an der Innenseite bzw. Innenwand der Hülle (7) anliegen, um ein Austreten von Material, das im Behälter des Mischers, Reaktors od. dgl. behandelt wird, entlang der Welle (2) und insbesondere dem als Wellenstumpf ausgebildeten Ende (13) der Welle (2) zu hemmen und nach Möglichkeit ganz zu verhindern.

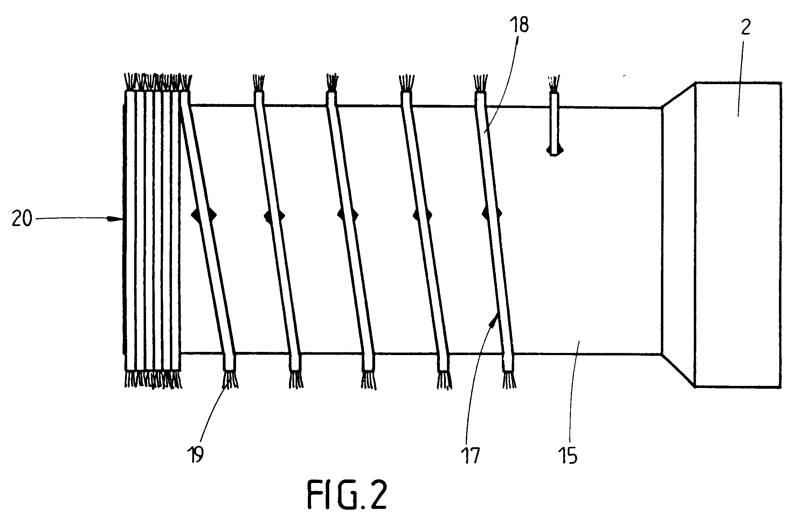

Wie insbesondere Fig. 2 zeigt, ist die wendelförmige Bürste (17) so angeordnet, daß die Steigung der einzelnen Wendeln von innen nach außen, d. h. von der Stirnwand (1) des Behälters in Richtung zum äußeren Ende des Wellen-Endes (3), abnimmt und schließlich der Grundkörper (18) mit den daran angeordneten Borsten (19) ein dicht aneinanderliegendes Paket (20) bildet.

Die Buchse (15) ist drehfest auf dem Ende (13) der Welle (2) angeordnet, während die Hülle (7) drehfest mit dem Deckel (5) und damit mit der Stirnwand (1) des feststehenden Behälters verbunden ist. Die wendelförmige Bürste (17) ist drehfest mit der Buchse (15) verbunden, so daß sich die Borsten (19) der Bürste (17) relativ zur feststehenden Innenwand der Hülle (7) bewegen, wenn die Welle (2) gedreht wird.

Die Dichtung (8) ist druckfest und luftdicht nach außen gekapselt. Zu diesem Zweck ist an der Innenseite des Deckels (5) das eine Ende eines biegsamen, zieharmonikaartig gewellten Rohres (21) befestigt, dessen entgegengesetztes Ende an einem starren Ring (22) angebracht ist. Der starre Ring (22) ist über eine radiale Wand (23) und Dichtungsringe (25) auf dem Ende (13) der Welle (2) abgestützt. Ein Positionierring (24) hält die Dichtungsringe (25) in der gewünschten Position innerhalb der radialen Wand (23).

Das flexibele bzw. biegsame gewellte Rohr (21) gewährleistet, daß die Hochvakuum-Dichtung (8) stets luftdicht gekapselt bleibt, selbst wenn sich die Welle (2) durchbiegen und damit deren Enden (13) sich aus der idealen gradlinigen Position verstellen sollten.

An den starren Ring (22) sind zwei Stutzen (26) und (27) angebaut. Der oben befindliche Stutzen (26) bildet einen Anschluß zu einem nicht dargestellten Vakuumerzeuger, während der unten angeordnete Stutzen (27) zu einer nicht dargestellten Ablaßeinrichtung für eventuell durch die Hochvakuum-Dichtung (8) ausgelecktes Behandlungsgut führt.

Das Gehäuse (9) enthält im Bereich der Stutzen (26) und (27) je eine Öffnung (28) bzw. (29), damit die Stutzen (26) und (27) frei und bequem zugänglich sind.

Am freien Ende des Gehäuses (9) ist die eigentliche Lagerung (12) vorgesehen. Diese umfaßt einen am Außenumfang ballig ausgebildeten Ring (30), der innerhalb einer kugelkalottenförmigen ringförmigen Lagerpfanne (31) angeordnet ist. Daher sind Relativbewegungen zwischen Ring (30) und Lagerpfanne (31) möglich, um Durchbiegungen der Welle (2) bzw. Verstellungen des Endes (3) derselben ausgleichen zu können, ohne daß derartige Durchbiegungen in das Gehäuse (9) eingehen und dieses verbiegen bzw. verspannen.

Innerhalb des feststehenden bzw. undrehbaren Ringes (30) ist ein Lager (32) angeordnet, das zwischen einem feststehenden Außenring (33) und einem auf dem Ende (13) der Welle (2) drehfest angeordneten und damit mit der Welle (2) drehbaren Innenring (34) zwei Wälzlager (35) und (36) aufweist, die so eingestellt werden können, daß das Lagerspiel insgesamt sehr gering ist. Vorzugsweise sind die Wälzlager Axiallager.

Im Bereich der Lagerung ist auf dem Gehäuse (9) ein Mantel (37) für Kühlmittel wie Wasser angeordnet, das durch angeschlossene Stützen (38) und (39) zu- bzw. abgeführt werden kann. Auf diese Weise wird das Gehäuse (9) im Bereich der Lagerung (12) von außen gekühlt.

An die radiale Wand (23) ist ein Kopf (40) angeschlossen, durch den weiteres Kühlmittel wie Wasser in einen innerhalb der Wand (23) befindlichen Hohlraum (41) geleitet wird, um die Wand (23) und insbesondere die Dichtungsringe (25), welche auf dem Innenring (34) des Lagers (32) aufliegen, zu kühlen.

## Patentansprüche

1. Lager für die Welle des Mischwerkes eines Mischers od. dgl., die durch eine temperaturbeständige Hochvakuum-Dichtung aus dem Behandlungs-Behälter des Mischers od. dgl. herausgeführt ist, mit einem feststehenden Gehäuse, das an der Außenseite des Behälters angeordnet ist, mit Wälzlagern zwischen der drehbaren Welle und dem feststehenden Gehäuse und mit einer Dichtung, die innerhalb des Gehäuses zwischen der Welle und der Wand des Behälters angeordnet ist,
**dadurch gekennzeichnet**,
daß die Dichtung (8) im Gehäuse (9) vakuumdicht gekapselt ist, wobei die Dichtung (8) auf der Welle (2,3) eine wendelförmige Bürste (17) aufweist, deren radial stehende Borsten (19) an der Innenwand einer feststehenden ringförmigen Hülle (7) anliegen und wobei die Kapselung der Dichtung (8) ein biegsames bzw. flexibles, zieharmonikaartig gewelltes Rohr (21) aufweist, das innerhalb des Gehäuses (9) befestigt ist und sich koaxial zur Dichtung (8) erstreckt, und daß die Wälzlager (35,36) zwischen konzentrischen Lagerringen (33,34) und innerhalb von Kugelkalotten (30,31) im Gehäuse (9) angeordnet sind, wobei die Kugelkalotten (30,31) aus einem inneren Ring (30) mit ballig ausgebildetem Außenumfang und einem äußeren Ring (31) mit lagerpfannenartig ausgebildeter Innenwand bestehen, wobei der ballig ausgebildete Außenumfang des inneren Ringes (30) und die lagerpfannenartig ausgebildete Innenwand des äußeren Ringes (31) mit Gleitsitz einander entsprechen bzw. leichte Konturen aufweisen.

2. Lager nach Anspruch 1, dadurch gekennzeichnet, daß die Kapselung (21, 22, 23) der Dichtung (8) an ihrem äußeren Ende mittels Dichtungsringen (25) auf der Welle (2, 3) abgestützt und mit ihrem inneren Ende an der Stirnwand (1, 5) des Behandlungs-Behälters befestigt ist.

3. Lager nach Anspruch 1 oder 2, dadurch gekennzeichnet, daß die Kapselung (21, 22, 23) der Dichtung (8) mit einem Kühlsystem (40, 41) versehen ist.

4. Lager nach einem der Ansprüche 1 bis 3, dadurch gekennzeichnet, daß die Wälzlager (35, 36) Axiallager und spielfrei einstellbar angeordnet sind.

5. Lager nach einem der Ansprüche 1 bis 4, dadurch gekennzeichnet, daß das Gehäuse (9) im Bereich der Wälzlager (35, 36) mit einer Kühleinrichtung (37, 38, 39) versehen ist.

6. Lager nach einem der Ansprüche 1 bis 5, dadurch gekennzeichnet, daß die Kapselung (21, 22, 23) für die Dichtung (8) mit ihrem äußeren Ende (23) drehfest mit dem äußeren Lagerring (33) der Lagerung für die Wälzlager (35, 36) und somit drehfest mit dem inneren Ring (30) der Kugelkalotten verbunden ist.

## Claims

1. Bearing for the shaft of the stirrer of a mixer or the like passing through a temperature-resistant high-vacuum seal out of the treatment vessel of the mixer or the like, with a stationary housing arranged on the outside of the vessel with roller bearings between the rotatable shaft and the stationary housing and with a seal which is arranged within the housing between the shaft and the wall of the vessel,
characterised in that
that the seal (8) is hermetically sealed in a vacuum tight manner in the housing (9), the seal (8) having on the shaft (2,3) a helical brush (17) of which the radially projecting bristles (19) engage the inside wall of a stationary ring-shaped sleeve (7) and the enclosure of the seal (8) has a yielding or flexible concertina-like wavy tube (21) secured within the housing (9) and extending coaxially with respect to the seal (8), and that the roller bearings (35,36) are arranged between concentric races (33,34) and within spherical mountings (30,31) in the housing (9), the spherical mountings (30,31) comprising an inner ring (30) having a spherical external surface and an outer ring (31) with a concave inner surface, the spherical outer surface of the inner ring (30) and the concave inside of the outer ring (31) having a sliding mutual engagement with sliding contact.

2. Bearing according to claim 1, characterised in that the hermetic sealing (21,22,23) of the seal (8) engages at its outer end by means of sealing rings (25) on the shaft (2,3) and with its inner end against the wall (1,5) of the treatment vessel.

3. Bearing ring according to claim 1 or 2, characterised in that the sealing (21,22,23) of the seal (8) is provided with a cooling system(40,41).

4. Bearing according to one of claims 1 to 3, characterised in that the roller bearings (35, 36) are axial bearings and are arranged to be set without any play.

5. Bearing according to one of claims 1 to 4, characterised in that the housing (9) is provided with a cooling device (37,38,39) in the neighbourhood of the roller bearings (35,36).

6. Bearing according to one of claims 1 to 5, characterised in that the sealing (21,22,23) for the seal (8) is connected with its outer end (23) to the outer mounting ring (33) of the mounting for the roller bearings (35,36) and is thereby connected for rotation with the inner ring (30) of the spherical mounting arrangement.

## Revendications

1. Palier pour l'arbre d'un mélangeur ou similaire, qui émerge de la cuve du mélangeur ou similaire par l'intermédiaire d'un joint d'étanchéité sous vide poussé à haute résistance thermique, avec un carter fixe qui est disposé sur la face externe de la cuve, avec des paliers à roulement entre l'arbre rotatif et le carter fixe et avec un joint d'étanchéité, qui est disposé à l'intérieur du carter entre l'arbre et la paroi de la cuve, caractérisé en ce que le joint d'étanchéité (8) est enfermé de façon étanche au vide dans le carter (9), le joint d'étanchéité (8) sur l'arbre (2,3) étant muni d'un balai de forme hélicoïdale (17), dont les crins de brosserie radiaux (19) sont en contact avec la paroi interne d'une gaine annulaire fixe (7) et isolation du joint d'étanchéité (8) étant munie d'un tuyau souple ou flexible à spires parallèles, de type soufflet (21), qui est fixé à l'intérieur du carter (9) et qui s'étend concentriquement par rapport au joint d'étanchéité (8), et que les paliers à roulement (35,36) sont disposés entre les bagues de palier concentriques (33,34) et l'intérieur de calottes (30,31) dans le carter (9), où les calottes (30,31) consistent en une couronne interne (30) avec surface externe de forme convexe et une couronne externe (31) avec paroi interne en forme de coussinet, la circonférence externe de forme convexe de la bague interne (30) et la paroi interne en forme de coussinet de la couronne externe (31) présentant l'une par rapport à l'autre un ajustement glissant ou étant dotées de contours arrondis.

2. Palier selon la revendication 1, caractérisé en ce que l'isolation (21,22,23) du joint d'étanchéité (8) est en appui par l'intermédiaire de son extrémité extérieure au moyen des bagues d'étanchéité (25) sur l'arbre (2,3) et monté par l'intermédiaire de son extrémité interne sur la paroi frontale (1,5) de la cuve de traitement.

3. Palier selon la revendication 1 ou 2, caractérisé en ce que l'isolation (21,22,23) du joint d'étanchéité (8) comporte un système de refroidissement (40,41).

4. Palier selon l'une des revendications 1 à 3, caractérisé en ce que les paliers à roulement (35,36) sont disposés en paliers de butée et réglables sans jeu.

5. Palier selon l'une des revendications 1 à 4, caractérisé en ce que le carter (9) comporte dans la zone des paliers à roulement (35,36) un dispositif de refroidissement (37,38,39).

6. Palier selon l'une des revendications 1 à 5, caractérisé en ce que l'isolation (21, 22,23) pour le joint d'étanchéité (8) avec son extrémité externe (23) est fixement reliée à la bague de palier externe (33) du montage de palier pour les paliers à roulement (35,36) et ainsi fixement à la bague interne (30) des calottes.
